# EUROPÄISCHE PATENTSCHRIFT

(11) **EP 2 706 042 B1**
(45) Veröffentlichungstag und Bekanntmachung des Hinweises auf die Patenterteilung: **30.03.2016**
(21) Anmeldenummer: 13181824.7
(22) Anmeldetag: 27.08.2013
(51) Int. Cl.: C02F 1/467, C02F 1/72

(54) **Leitungsgebundener Wasserspender und Verfahren zum Betreiben des Wasserspenders**
Point-of-use water dispenser and method for using said water dispenser
Fontaine d'eau réseau et méthode pour l'utilisation de ladite fontaine d'eau

(30) Priorität: 07.09.2012 DE 102012215936
(43) Veröffentlichungstag der Anmeldung: 12.03.2014
(73) Patentinhaber: Oxymount Technology GmbH, 96450 Coburg (DE)
(72) Erfinder: Pflaum, Ulrich, 96450 Coburg (DE)
(74) Vertreter: Isarpatent

(56) Entgegenhaltungen:
- EP-A1- 1 647 528
- DE-A1- 19 926 159
- DE-U1-202011 110 027
- US-A- 6 126 797

## Beschreibung

### GEBIET DER ERFINDUNG

Die vorliegende Erfindung betrifft einen leitungsgebundenen Wasserspender zur Abgabe von Trinkwasser. Die Erfindung betrifft ferner ein Verfahren zum Betreiben eines solchen leitungsgebundenen Wasserspenders.

### TECHNISCHER HINTERGRUND

Unter einem Wasserspender versteht man im Allgemeinen einen Erfrischungsgetränkeautomaten, der Trinkwasser abgibt. Solche Wasserspender, die allgemein bekannt sind, geben meist ungekühltes oder gekühltes stilles oder mit Kohlensäure versetztes Trinkwasser ab. Bei Wasserspendern unterscheidet man so genannte leitungsgebundene und nicht leitungsgebundene Wasserspender. Die leitungsgebundenen Wasserspender werden an die Wasserleitung eines Trinkwasserversorgungsnetzes angeschlossen. Bei nicht leitungsgebundenen Wasserspendern befindet sich das Wasser in großen Wasserbehältern, die auf dem Wasserspender luftdicht aufgesteckt werden. Die vorliegende Erfindung sowie die ihr zugrunde liegende Problematik wird nachfolgend mit Bezug auf die eben genannten leitungsgebundenen Wasserspender erläutert.

Solche leitungsgebundenen Wasserspender können trotz guter Wasserqualität verkeimen, da das Trinkwasser aus dem Trinkwasserversorgungsnetz auch bei hoher Trinkwasserqualität nicht steril ist und immer eine gewisse Konzentration an Keimen aufweist. Daher gelangen Keime auch mit dem Wasser, mit dem der Wasserspender beschickt wird, in die wasserführenden Bauteile. Die Gefahr des Verkeimens besteht insbesondere dann, wenn die dem Wasserspender vorgeschalteten Wasserfilter die Keime im Trinkwasser aufnehmen. Die Keime, die dort wachsen können, können anschließend in das geschlossene System des Wasserspenders eindringen und einen Biokeimfilm in den wasserführenden Teilen des Wasserspenders ausbilden.

Auch in den Zapfstellen von Wasserspendern bleibt nach jeder Betätigung Feuchtigkeit zurück. Keime, also Bakterien, Sporen von Einzellern, Pilze und Bakterien, die über die Luft oder bei Berührung dort eindringen, finden Wachstumsbedingungen und vermehren sich. Sie dringen von der Zapfstelle aus weiter in die wasserführenden Leitungen vor (so genannte retrograde Verkeimung).

Diese eben genannten Verkeimungsvorgänge werden durch regelmäßige Stagnationszeiten (zum Beispiel Nichtgebrauch über Nacht oder über das Wochenende) sogar noch gefördert.

Aus diesem Grunde ist wie bei allen Geräten, die mit Lebensmitteln in Kontakt kommen, eine regelmäßige Reinigung geboten. Zur Verbesserung der Wasserqualität und damit zu dessen Reinigung existieren die verschiedenen Ansätze:
Um die Verkeimung des über die Trinkwasserversorgung eingekoppelten Trinkwassers zu vermeiden, kann dieses Wasser ultragefiltert werden, bevor es in den Wasserspender gelangt. Zusätzlich oder alternativ können Membranfilter verwendet werden, die eine Rückverkeimung verhindern können. Eine weitere Möglichkeit zur Verhinderung der Verkeimung im Wasserspender besteht in der Behandlung des Trinkwassers mit UV-Licht bei einer Wellenlänge von zum Beispiel 254 nm. Allerdings ist die Behandlung des Trinkwassers mit UV-Licht nicht unproblematisch und zudem wartungsintensiv. Zudem sind sämtliche eben genannten Maßnahmen zur Minimierung einer Verkeimung des Trinkwassers mit relativ hohen Betriebskosten verbunden. Um diese hohen Kosten der Ultrafiltration zu umgehen, werden die entsprechenden Wasserspender typischerweise einer regelmäßigen Desinfektion mit entsprechenden chemischen Mitteln unterzogen. Gemäß der für die Reinigung und Desinfektion von Getränkeschankanlagen geltenden DIN 6650 müssen die Wasserspender spätestens alle sechs Monate einer Reinigung unterzogen werden, um Keime, Bakterien und dergleichen abzutöten. Diese Maßnahme ist mit relativ hohen Reinigungskosten insbesondere für das Servicepersonal vor Ort verbunden. Zum anderen wird dieser regelmäßige Reinigungszyklus meist vergessen oder nicht eingehalten.
Das Gebrauchsmuster DE 20 2004 010 572 U1 beschreibt einen Wasserspender, der Mittel zur Entkeimung des zulaufenden Wassers und einen entsprechenden Verkeimungsschutz der wasserführenden Teile umfasst.

Die Patentschrift US 6,126,797 B1 beschreibt einen leitungsgebundenen Wasserspender, bei dem Chlor zur Wasserdesinfektion mittels Elektrolyse erzeugt wird.

### ZUSAMMENFASSUNG DER ERFINDUNG

Vor diesem Hintergrund liegt der vorliegenden Erfindung die Aufgabe zugrunde, das Trinkwasser eines leitungsgebundenen Wasserspenders besser zu reinigen.
Erfindungsgemäß wird diese Aufgabe durch einen Wasserspender mit den Merkmalen des Patentanspruchs 1 und/oder durch ein Verfahren mit den Merkmalen des Patentanspruchs 11 gelöst.

Demgemäß ist vorgesehen:
- Ein leitungsgebundener Wasserspender zur Abgabe von Trinkwasser, mit zumindest einem Wasseranschluss, über den der Wasserspender an eine geräteexterne Trinkwasserversorgung anschließbar ist, mit zumindest einem Wasserauslass, der über ein geräteinternes Wasserleitungsnetz mit dem Wasseranschluss verbunden ist, mit zumindest einer Reinigungseinrichtung, welche in eine Wasserleitung des geräteinternen Wasserleitungsnetzes eingebaut ist und welche dazu ausgebildet ist, Hypochlorit zu erzeugen, das zum Reinigen und zur Desinfektion dem im geräteinternen Wasserleitungsnetz vorhandenen Trinkwasser zuführbar ist, wobei zumindest ein Sensor vorgesehen ist, welcher in dem Wasserleitungsnetz angeordnet ist und welcher dazu ausgebildet ist, die Konzentration des im Trinkwasser des Wasserleitungsnetzes gelösten Natriumchlorids zu messen, wobei ein Natriumchlorid-Depot vorgesehen ist, welches dazu ausgebildet ist, dem im Wasserleitungsnetz enthaltenen Trinkwasser bei Bedarf Natriumchlorid zuzusetzen, wobei, wenn die von dem Sensor gemessene Natriumchlorid-Konzentration im Trinkwasser unter einen vorgegebenen Schwellwert fällt, das Natriumchlorid-Depot eine gewünschte Menge an Natriumchlorid dem Trinkwasser zugibt, um eine gewünschte Natriumchlorid- Konzentration im Trinkwasser zu erzeugen.
- Ein Verfahren zum Betreiben eines an einer geräteexternen Trinkwasserversorgung angeschlossenen leitungsgebundenen Wasserspenders, mit einem ersten Betriebsmodus, bei dem Trinkwasser über einen Wasserauslass des Wasserspenders abgebbar ist, und mit einem zweiten Betriebsmodus, bei dem Trinkwasser in einem geräteinternen Wasserversorgungsnetz unter Verwendung einer eigens zur Trinkwasserreinigung in dem Wasserspender vorgesehenen Reinigungseinrichtung gereinigt wird, indem Hypochlorit erzeugt und dem Trinkwasser zugegeben wird.

Die der vorliegenden Erfindung zugrunde liegende Idee besteht darin, eine permanente Reinigung des im Wasserspender vorgesehenen Trinkwassers vorzunehmen und damit eine unerwünschte Verkeimung gar nicht erst entstehen zu lassen. Die Erfindung sieht hier eine eigens im Wasserspender vorgesehene Reinigungseinrichtung, die auf einem galvanischen Prinzip basiert, vor. Diese Reinigungseinrichtung erzeugt in regelmäßigen Abständen, das heißt z.B. nach wenigen Stunden, während der Nacht oder am Wochenende, Hypochlorit, welches dem Trinkwasser zugegeben wird. Dieses Hypochlorit wird, ohne dass der Wasserspender einen Serviceintervall unterzogen werden muss, während des laufenden Reinigungsbetriebs des Wasserspenders ständig produziert und in einer bestimmten Konzentration in das Trinkwasser abgegeben. Die Menge des erzeugten Hypochlorits hängt im Wesentlichen davon ab, welchen Verkeimungsgrad das dem Wasserspender über das Trinkwasserversorgungsnetz zugeführte Trinkwasser enthält, sowie davon, welche Menge an Keimen im Trinkwasser enthalten ist. Das Trinkwasser innerhalb des geräteinternen Wasserversorgungsnetzes zirkuliert im Reinigungsbetrieb, so dass sichergestellt wird, dass das gesamte geräteinterne Trinkwasser mit dem erzeugten Hypochlorit in Kontakt gerät. Das von der Reinigungseinrichtung erzeugte Hypochlorit führt dazu, dass Keime wie etwa Bakterien unwirksam gemacht werden.

Dieses Hypochlorit ist selbst sehr instabil und zerfällt nach kurzer Zeit wieder in Natriumchlorid und flüchtiges Wasserstoff und Sauerstoff. Insofern ist die Erzeugung von Hypochlorit zur Abtötung von Bakterien und Keimen einerseits sehr wirkungsvoll. Andererseits wird aufgrund deren Instabilität gewährleistet, dass die Erzeugung und Zugabe des Hypochlorits die Trinkwasserqualität nicht beeinflusst.

Der besondere Vorteil der vorliegenden Erfindung besteht darin, dass für die Reinigung des Trinkwassers innerhalb des Wasserspenders kein Servicepersonal vorhanden sein muss und auch keine eigens dafür vorgesehene, aufwändige Reinigungseinrichtung bereitgestellt werden muss, wie diese bei bekannten Wasserspendern verwendet werden. Auf diese Weise kann sehr umweltfreundlich und kostengünstig eine Reinigung des geräteinternen Trinkwassers bereitgestellt werden. Darüber hinaus kann stets gewährleistet werden, dass das vom Wasserspender abgegebene Trinkwasser eine sehr hohe Trinkwasserqualität mit einer minimalen Keim- und Bakterienkonzentration aufweist.

Vorteilhafte Ausgestaltungen und Weiterbildungen ergeben sich aus den weiteren Unteransprüchen sowie aus der Beschreibung unter Bezugnahme auf die Figuren der Zeichnung.

Die Reinigungseinrichtung weist ein Rohrleitungsstück auf, welches über entsprechende Anschlüsse an die Wasserleitung angeschlossen ist. Ferner weist die Reinigungseinrichtung eine elektrochemisch betriebene Zelle, z.B. eine galvanische Zelle, auf, die wenigstens zwei voneinander beabstandete, innerhalb des Rohrleitungsstücks angeordnete Elektroden umfasst. Diese Elektroden bilden im Betrieb einen in das Innere des Rohrleitungsstückes, in welchem das Trinkwasser zirkuliert, hineinragenden Pluspol und Minuspol, welche bei Anlegen einer Spannung eine entsprechende galvanische Reaktion bewirken. Hierfür sind die Elektroden über deren Materialauswahl, deren Größe und deren Form derart ausgebildet, dass sie bei Beaufschlagung der Elektroden mit einer Spannung Hypochlorit in dem in dem Rohrleitungsstück vorhandenen Trinkwasser erzeugen. Die vorliegende Erfindung basiert auf der Erkenntnis, dass auch Trinkwasser aus dem öffentlichen Trinkwasserversorgungsnetz immer einen mehr oder weniger großen Anteil an Spurenelementen, wie Chlorid, Sulfat, Nitrat, Nitrid und dergleichen, aufweist. Insbesondere weist solches Trinkwasser oder Leitungswasser immer auch Spurenelemente an Kochsalz (NaCl) auf. Bei Anlegen einer Spannung an den Elektroden der galvanischen Zelle wird eine chemische Reaktion ausgelöst, bei der aus Wasser (H₂0) und Kochsalz (NaCl) unter anderem Hypochloritionen ClO⁻ erzeugt werden. Diese Hypochloritionen sind sehr instabil und zerfallen nach kurzer Zeit wieder in Natriumchlorid und Sauerstoff.

Wesentlich bei der vorliegenden Erfindung ist die Materialauswahl der Elektroden. Die beiden Elektroden sind in einem Ausführungsbeispiel jeweils aus einem elektrisch leitfähigen Mischoxid gebildet. Alternativ wäre auch denkbar, wenn zumindest eine der Elektroden als Graphitelektroden ausgebildet ist.

In einer bevorzugten Ausgestaltung ist die Reinigungseinrichtung Teil des geräteinternen Wasserleitungsnetzes. Zu diesem Zwecke ist die Reinigungseinrichtung in diese derart eingebaut, dass das durch die Wasserleitungen des Wasserleitungsnetzes strömende Trinkwasser gleichfalls durch die Reinigungseinrichtung strömt. In diesem Falle könnte die Reinigungseinrichtung permanent von dem Wasser durchströmt werden. Besonders bevorzugt ist es aber, wenn die Reinigungseinrichtung nicht permanent von Wasser durchströmt wird, sondern über eine Bypasseinrichtung oder über einen Rückkopplungspfad zu- und wegschaltbar ist.

Der erfindungsgemäße Wasserspender ist in einer bevorzugten Ausgestaltung dazu ausgebildet, unterschiedlich sprudelndes Wasser abzugeben. Hierzu weist das Wasserleitungsnetz eine erste Wasserleitung auf, über welche dem Wasserauslass stilles Trinkwasser zuführbar ist. Zusätzlich oder alternativ kann auch eine zweite Wasserleitung vorgesehen sein, in welcher ein Karbonator angeordnet ist oder die mit einem Karbonator koppelbar ist. In dem Karbonator wird vorgekühltes Trinkwasser unter Druck mit Kohlendioxid versetzt und dann zum Wasserauslass, also zum Zapfhahn, gepresst. Je nachdem, wie stark das Trinkwasser mit Kohlendioxid versetzt wird, kann ein sanftes, prickelndes oder stark sprudelndes Wasser bereitgestellt werden. Zusätzlich oder alternativ weist das Wasserleitungsnetz eine dritte Wasserleitung auf, in welcher eine Sauerstoffinjektoreinrichtung vorgesehen ist oder die mit einer Sauerstoffinjektoreinrichtung koppelbar ist. Über die dritte Wasserleitung lässt sich dem Wasserauslass sauerstoffversetztes Trinkwasser zuführen.

Zusätzlich kann dieses Wasser auch mehr oder weniger stark gekühlt werden, was über eine eigens dafür vorgesehene, im Wasserleitungsnetz angeordnete Kühleinrichtung realisierbar ist. Diese Kühleinrichtung ist insbesondere bei einem Versetzen des Trinkwassers mit Kohlendioxid oder Sauerstoff von Vorteil, da sich diese Gase in kaltem Wasser besser lösen lassen. Insgesamt lassen sich damit bedarfsweise verschiedene Arten an Trinkwasser bereitstellen. Typischerweise kann für jede der Wasserleitungen ein eigens dafür vorgesehener Wasserauslass (oder Zapfhahn) bereitgestellt werden. Allerdings ist es in einer Ausgestaltung der vorliegenden Erfindung vorteilhaft, wenn lediglich ein einziger Wasserauslass vorgesehen ist, über den sämtliche verschiedenen Trinkwasserarten ausgegeben werden. Typischerweise sind zumindest zwei Wasserauslässe vorgesehen, je ein Wasserauslass für normal temperiertes Trinkwasser und ein anderer Wasserauslass für gekühltes Trinkwasser.

In einer weiteren Ausgestaltung weist das Wasserleitungsnetz eine vierte Wasserleitung auf, die als Rückkoppelleitung ausgebildet ist. Über die vierte Wasserleitung wird Trinkwasser aus dem Wasserleitungsnetz im Bereich des ausgangsseitigen Wasserauslasses in einen Bereich des eingangsseitigen Wassereinlasses derart rückgeführt, dass das Trinkwasser in dem Wasserleitungsnetz zirkulieren kann. Dieses Zirkulieren erfolgt typischerweise über eine im Wasserleitungsnetz vorgesehene Wasserpumpe. Vorzugsweise ist die Reinigungseinrichtung in der vierten Wasserleitung eingebaut. Zusätzlich oder alternativ wäre auch denkbar, dass die Reinigungseinrichtung in einer eigens dafür vorgesehenen Bypassleitung vorgesehen ist, über welche ein Abschnitt der Wasserleitung des Wasserleitungsnetzes überbrückbar ist.

Gemäß der vorliegenden Erfindung ist ein Sensor vorgesehen, welcher im Wasserleitungsnetz angeordnet ist. Nachdem das Vorhandensein von Natriumchlorid im Trinkwasser wesentlich für die ordnungsgemäße Funktion der Reinigungseinrichtung ist, ist es auch von Bedeutung zu wissen, welche Natriumchlorid-Konzentration im Trinkwasser vorhanden ist. Diese Natriumchlorid-Konzentration wird über den Sensor gemessen. Sofern beispielsweise zu wenig Natriumchlorid im Trinkwasser vorhanden ist, könnte dieses dem Trinkwasser zugeführt werden.

Hierzu ist ein Natriumchloriddepot vorgesehen. Über dieses Natriumchloriddepot kann dem Trinkwasser innerhalb des Wasserleitungsnetzes bedarfsweise Natriumchlorid zugeführt werden, beispielsweise wenn die gemessene Natriumchlorid-Konzentration unter eine vorgegebene Konzentration fällt, die für die Funktion der Reinigungseinrichtung notwendig ist. Damit wird sichergestellt, dass die Funktion der Reinigungseinrichtung auch bei stark natriumchloridarmen Trinkwasser bestehen bleibt.
In einer weiteren Ausgestaltung der vorliegenden Erfindung ist eine elektrische Steuereinrichtung vorgesehen. Mittels dieser elektrischen Steuereinrichtung, die zum Beispiel in einem Mikroprozessor oder Mikrocontroller implementiert ist, sind sämtliche Funktionen des Wasserspenders nach Maßgabe eines entsprechenden, in der Steuereinrichtung implementierten Steuerprogramms steuerbar. Diese Steuerung erfolgt zusätzlich auch nach Maßgabe von Steuerbefehlen, die von einem Anwender über eine Eingabeeinrichtung, wie etwa einer Tastatur, eingegebenen werden. Die elektrische Steuereinrichtung ist somit in der Lage, verschiedene Funktionen, wie etwa die Funktion der Reinigungseinrichtung, von innerhalb des Wasserspenders vorgesehenen Absperrventilen, der Wasserpumpe, der Kühleinrichtung, des Karbonators, der Leckageabschalteinrichtung, des Natriumchloriddepots zur Zugabe von Natriumchlorid und dergleichen, zu steuern.

Die wesentliche Funktion ist im Hinblick auf die vorliegende Erfindung die Funktion der Reinigungseinrichtung. In der Steuereinrichtung kann beispielsweise auch hinterlegt sein, welche Reinigungsintervalle vorgesehen sind, das heißt nach welchen regelmäßigen oder auch unregelmäßigen Abständen ein nächster Reinigungszyklus gestartet werden soll. Daneben steuert die Steuereinrichtung auch die verschiedenen Betriebsmodi, also den normalen Betrieb, den Reinigungsbetrieb, den Wartungsbetrieb und ggfs. weitere Betriebsmodi.

Daneben wird über die Steuereinrichtung natürlich auch die Abgabe der unterschiedlichen Trinkwasserarten gesteuert, das heißt ob stilles Wasser, mehr oder weniger stark CO₂ oder O₂ versetztes Wasser, temperiertes oder gekühltes Wasser und welche Wassermenge abgegeben wird. Darüber hinaus wird hier auch gesteuert, mit welcher Geschwindigkeit das Wasser durch die Wasserleitungen fließen kann, was im Wesentlichen über die Wasserpumpe und die entsprechenden Absperrventile und Drosseln gesteuert wird. Über die Steuerung des Natriumchloriddepots wird gesteuert, welche Konzentration an Natriumchlorid im Trinkwasser enthalten sein muss oder sollte, sofern der Wasserspender im Reinigungsmodus betrieben wird. Zusätzlich kann auch ein Energiesparmodus vorgesehen sein, bei dem der Wasserspender beispielsweise nach längerem Nichtgebrauch in einen energiesparenden Modus gefahren wird, beispielsweise indem die Kühlung abgestellt oder heruntergefahren wird und bei dem beispielsweise sämtliche elektrischen und elektronischen Komponenten in einem Energiesparmodus betrieben werden.

In einer bevorzugten Ausgestaltung ist eine Wasserpumpe vorgesehen, die dazu ausgebildet ist, Trinkwasser über eine in dem Wasserleitungsnetz vorgesehene Rückkoppelleitung zirkulieren zu lassen. Zusätzlich kann die Wasserpumpe auch dazu vorgesehen sein, dass von dem eingangsseitigen Wasseranschluss in den Wasserspender eingekoppelte Trinkwasser über das geräteinterne Wasserleitungsnetz zu dem ausgangsseitigen Wasserauslass zu pumpen. Allerdings ist dies vielfach nicht notwendig, da das eingangsseitig eingekoppelte Wasser bereits mit einem gewissen Wasserdruck aus dem öffentlichen Wasserversorgungsnetz eingekoppelt wird und daher nicht eigens dafür gepumpt werden muss.

In einer besonders bevorzugten Ausgestaltung ist eine Leckageschalteinrichtung vorgesehen. Diese Leckageabschalteinrichtung weist einen Leckagesensor auf, der beispielsweise als Feuchtigkeits- oder Flüssigkeitssensor ausgebildet ist und der dazu ausgebildet ist, das Vorhandensein eines Wasserlecks des Wasserspenders zu detektieren. Die Leckageabschalteinrichtung ist dazu ausgebildet, im Falle eines erkannten Lecks den eingangsseitigen Wasseranschluss automatisch zu sperren und damit die Wasserzufuhr zu unterbinden. Dieser Leckagesensor ist vorzugsweise am Boden des Wasserspenders an einem solchen Ort angebracht, an dem sich im Falle eines Wasserlecks voraussichtlich das Wasser sammeln wird. Auf diese Weise kann sehr effektiv auch ein solches Wasserleck detektiert werden, welches aufgrund eines tropfenden Wasseranschlusses, eines nicht dichten Wasseranschlusses, einer nicht dichten Wasserleitung, etc. mit anderen Mitteln nicht möglich wäre. Auf diese Weise werden größere Wasserschäden, die beispielsweise über Nacht oder übers Wochenende entstehen können und dadurch sonst nicht erkannt werden, vermieden.

In einer weiteren Ausgestaltung ist zumindest ein Wasserfilter vorgesehen, der stromaufwärts unmittelbar nach dem eingangsseitigen Wasseranschluss in einer eingangsseitigen Wasserleitung des Wasserleitungsnetzes angeordnet ist. Dieser Wasserfilter ist dazu ausgebildet, durch Herausfiltern von Partikeln und Trübstoffen aus dem über das Wasserversorgungsnetz zugeführten Wasser oder durch Entfernen von unerwünschten, im Wasser gelösten Substanzen die Wasserbeschaffenheit zu verbessern oder die Partikel-Konzentration zu senken. Zu unterscheiden sind hier solche Wasserfilter, die rein physikalisch, z.B. nach dem Siebeffekt arbeiten, und andere Filter, die zum Beispiel chemisch-physikalische Effekte zur Entfernung von gelösten Substanzen ausnutzen. Zur ersten Gruppe gehören Gieß- und Sandfilter sowie die Ultra- bzw. Mikrofiltration. Im Wasser gelöste Stoffe werden hingegen im Falle von organischen Substanzen durch Adsorption bzw. durch Aktivkohle aus dem Wasser entfernt oder aber durch Ionentausch an einem Ionenaustauschermaterial, sofern es sich um Ionen handelt, entfernt.

In einer weiteren bevorzugten Ausgestaltung ist eine Desinfektionseinrichtung vorgesehen, die einen Behälter aufweist, in dem bestimmungsgemäß eine Desinfektionslösung eingefüllt werden kann. Die Desinfektionseinrichtung ist dazu ausgebildet, bei Bedarf Desinfektionslösung dem Trinkwasser des Wasserleitungsnetzes zuzugeben. Zwar ist die Reinigungseinrichtung, die zur Reinigung Hypochlorit erzeugt, sehr effektiv und wirkungsvoll. Allerdings muss im Falle eines Ausfallens dieser Reinigungseinrichtung dennoch eine Reinigung sichergestellt werden. In diesem Falle bietet die Desinfektionseinrichtung, die bei Bedarf zugeschaltet wird, die Möglichkeit, das Wasserleitungsnetz mit der Desinfektionslösung zu spülen und damit zu reinigen. Damit wird eine Reinigung auch dann ermöglicht, sofern die Reinigungseinrichtung ausfällt.

Der erfindungsgemäße Wasserspender weist zumindest eines der folgenden Elemente auf:
- Steuerbare Absperrventile, über die der Wasserauslass wahlweise mit der ersten, der zweiten und/oder der dritten Wasserleitung koppelbar ist. Damit lässt sich der Druck in den Wasserleitungen einstellen sowie das Wasser in den Leitungen führen.
- Eine Kühleinrichtung, welche dazu vorgesehen ist, das in dem Wasserleitungsnetz strömende Trinkwasser zu kühlen. Dies ist bei einem Versetzen des Trinkwassers mit Kohlendioxid und/oder Sauerstoff von Vorteil, da diese Gase in gekühltem Wasser besser lösbar sind.
- Eine geräteinterne lokale Energieversorgung, über welche der Wasserspender elektrisch mit Energie versorgbar ist. Dies ist dann von Vorteil, wenn der Wasserspender an einer solchen Stelle aufgestellt wird, an der kein Stromversorgungsnetz verfügbar ist.
- Elektrische Versorgungsanschlüsse und damit verbundene elektrische Versorgungsleitungen, über welche der Wasserspender mit einer externen Energiequelle verbindbar ist. Dies ist im Vergleich zu einer lokalen Energieversorgung von Vorteil, da ein ständiges Aufladen der lokalen Energieversorgung nicht mehr erforderlich ist.
- Eine Eingabeeinrichtung, über die ein Anwender einen spezifischen Betriebsmodus zum Betreiben des Wasserspenders eingeben kann bzw. eine Programmierung des Wasserspenders vornehmen kann.

In einer besonders bevorzugten Ausgestaltung wird der zweite Betriebsmodus lediglich in regelmäßigen zeitlichen Abständen aktiviert. Beispielsweise kann vorgesehen sein, dass der zweite Betriebsmodus alle 24, 48, 36, etc. Stunden aktiviert wird. Denkbar wäre auch, dass der zweite Betriebsmodus lediglich einmal in der Woche aktiviert wird. Zusätzlich oder alternativ wäre auch denkbar, dass der zweite Betriebsmodus nach einer vorgegebenen Zeit nach dem letzten Aktivieren des ersten Betriebsmodus aktiviert wird. Beispielsweise kann vorgesehen sein, dass der zweite Betriebsmodus erst wieder nach 2, 4, 6, etc. Stunden nach dem letzten Aktivieren des ersten Betriebsmodus aktiviert wird. Zusätzlich oder alternativ kann vorgesehen sein, dass der zweite Betriebsmodus lediglich während des Wochenendes oder in der Nacht aktiviert wird, also zu Zeiten, bei denen der Wasserspender üblicherweise ohnehin nicht verwendet wird. In diesem Fall fällt es nicht auf, wenn der Wasserspender kurzzeitig in den zweiten Betriebsmodus schaltet und damit nicht betriebsbereit ist, um das geräteinterne Wasserversorgungsnetz zu reinigen.

In einer weiteren, besonders bevorzugten Ausgestaltung ist vorgesehen, dass nach einer gewissen Anzahl an durchlaufenen zweiten Betriebsmodi die Polarität der Elektroden der galvanischen Zelle umgepolt wird. Beispielsweise kann vorgesehen sein, dass bei jedem Reinigungsmodus die Polarität der Elektroden gewechselt wird oder dass nach einer vorgegebenen Anzahl, beispielsweise nach fünf Reinigungszyklen, die Polarität der Elektroden im zweiten Betriebsmodus umgepolt wird. Dieser Ausgestaltung liegt die Erkenntnis zugrunde, dass sich im galvanischen zweiten Betriebsmodus Mineralien auf den Elektroden der galvanischen Zelle der Reinigungseinrichtung absetzen können, insbesondere wenn das Trinkwasser sehr hart ist. Im Falle eines Umpolens der Polarität lösen sich diese Mineralien wieder von den entsprechenden Elektroden ab, sodass die Elektroden gar nicht erst dauerhaft verkalken können.

In einer besonders bevorzugten Ausgestaltung wird im ersten Betriebsmodus wahlweise gekühltes oder ungekühltes Trinkwasser ausgegeben, welches wahlweise zusätzlich mit Sauerstoff oder Kohlendioxid versetzt wird.

In einer besonders bevorzugten Ausgestaltung zirkuliert das Trinkwasser im zweiten Betriebsmodus in dem Wasserversorgungsnetz. Beispielsweise kann vorgesehen sein, dass das Trinkwasser mit ca. 1-5 Liter pro Minute, insbesondere in einem Bereich zwischen 2 und 3 Liter pro Minute, durch die galvanische Zelle der Reinigungseinrichtung strömt. Typischerweise weisen Wasserspender ein Wasserversorgungsnetz auf, in dem 1-2 Liter Trinkwasser innerhalb des Wasserversorgungsnetzes aufgenommen sind. Bei derartiger Dimensionierung des Wasserstromes und der Wassermenge innerhalb des Wasserspenders reicht die im Trinkwasser enthaltene Natriumchlorid-Konzentration im Allgemeinen aus, eine ausreichende Reinigungswirkung zu entfalten. Sofern mehr Wasser im Gesamtkreislauf des Wasserspenders enthalten ist und/oder sofern die Natriumchlorid-Konzentration im Trinkwasser sehr gering ist, kann als Abhilfe einerseits eine Reinigungseinrichtung bereitgestellt werden, die größere Elektrodenflächen aufweisen. Zusätzlich oder alternativ kann vorgesehen sein, dass Natriumchlorid dem Trinkwasser zugesetzt wird. Die Konzentration des zugesetzten Natriumchlorids sollte allerdings so gewählt sein, um die sensorische Qualität des Trinkwassers nicht zu beeinträchtigen, jedoch so hoch, um eine ausreichend wirksame Reinigungsfunktion bereitzustellen.

In einer weiteren Ausgestaltung wird das Wasserleitungsnetz innerhalb des Wasserspenders am Ende eines jeden zweiten Betriebsmodus gespült.

In einer weiteren Ausgestaltung ist ein dritter Betriebsmodus vorgesehen, bei dem der Wasserspender gewartet wird. In diesem dritten Betriebsmodus können im Wasserspender verschiedene Spülsequenzen ausgelöst werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnungen angegebenen Ausführungsbeispiele näher erläutert. Es zeigen dabei:
- Fig. 1: anhand eines Blockschaltbildes ein erstes Ausführungsbeispiel eines erfindungsgemäßen Wasserspenders;
- Fig. 2: eine Schnittansicht einer Reinigungseinrichtung für einen erfindungsgemäßen Wasserspender;
- Fig. 3: anhand eines Blockschaltbildes ein zweites, bevorzugtes Ausführungsbeispiel eines erfindungsgemäßen Wasserspenders.

Die beiliegenden Zeichnungen sollen ein weiteres Verständnis von Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind die entsprechenden Flussrichtungen des Wassers mit entsprechenden Pfeilen in den Rohrleitungen angedeutet.

In den Figuren der Zeichnung sind gleiche, funktionsgleiche und gleich wirkende Elemente, Merkmale und Komponenten - sofern nichts Anderes ausführt ist - jeweils mit denselben Bezugszeichen versehen.

### BESCHREIBUNG VON AUSFÜHRUNGSBEISPIELEN

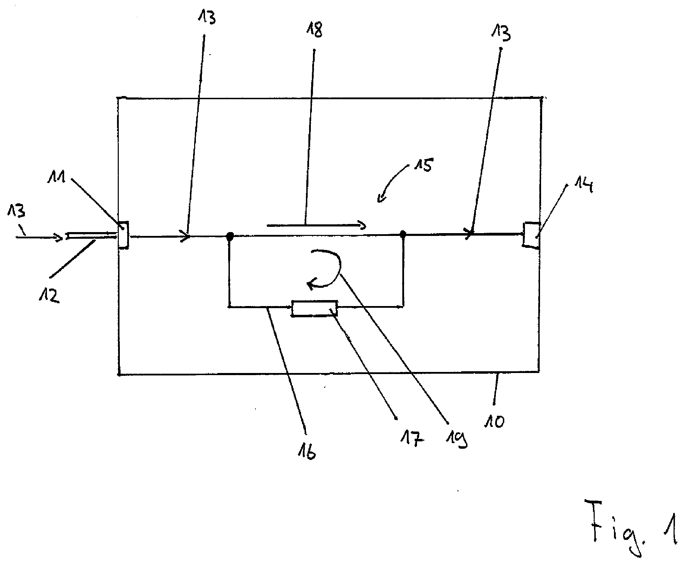

Fig. 1 zeigt anhand eines Blockschaltbildes ein erstes, allgemeines Ausführungsbeispiel eines erfindungsgemäßen Wasserspenders. In Fig. 1 ist mit Bezugszeichen 10 ein Wasserspender bezeichnet. Der Wasserspender 10 ist hier ein leitungsgebundener Wasserspender 10. Der Wasserspender 10 weist einen Wasseranschluss 11 auf, über den der Wasserspender 10 mit dem öffentlichen Trinkwasserversorgungsnetz 12 verbindbar ist. Über den Wasseranschluss 11 lässt sich Trinkwasser 13, allgemein auch als Leitungswasser bezeichnet, aus dem Trinkwasserversorgungsnetz 12 in den Wasserspender 10 einkoppeln. Das Trinkwasserversorgungsnetz 12 ist über hier nicht näher dargestellte Kopplungsmittel, beispielsweise eine Verschraubung oder einen Flansch, tropfsicher an dem Wasseranschluss 11 angebracht. Der Wasserspender 10 weist ferner einen Wasserauslass 14 auf, an dem beispielsweise ein hier nicht näher dargestellter Zapfhahn zur Ausgabe von Trinkwasser 13 angebracht ist. Der Wasserauslass 14 ist über ein Wasserspender-internes Wasserversorgungsnetz 15 mit dem eingangsseitigen Wasseranschluss 11 verbunden. Trinkwasser 13 kann so über den Wasseranschluss 11 und einen Hauptversorgungspfad 18 des Wasserleitungsnetzes 14 zum ausgangsseitigen Wasserauslass 14 gelangen.

Das Wasserleitungsnetz 15 weist eine Rückkopplungsrohrleitung 16 auf, in der erfindungsgemäß eine Reinigungseinrichtung 17 angeordnet ist. Unter Verwendung dieser Rückkopplungsrohrleitung 16 kann somit Trinkwasser vom ausgangsseitigen Bereich des Wasserversorgungsnetzes 15 durch die Reinigungseinrichtung 17 geführt werden. In der Reinigungseinrichtung 17 wird dem über die Rohrleitung 16 enthaltenen Trinkwasser Hypochlorit zugegeben. Dieses Hypochlorit führt dazu, dass im Trinkwasser 13 enthaltene Keime, Bakterien und dergleichen abgetötet werden, wodurch das Trinkwasser 13 desinfiziert und damit gereinigt wird. Das Trinkwasser 13 wird dann wieder in den Hauptversorgungspfad 18 des Wasserversorgungsnetzes zugeführt. Unter Verwendung dieser Rückkopplungsrohrleitung 16 kann damit das Trinkwasser 13 im Wasserversorgungsnetz zirkulieren, was durch den Pfeil 19 angedeutet ist.

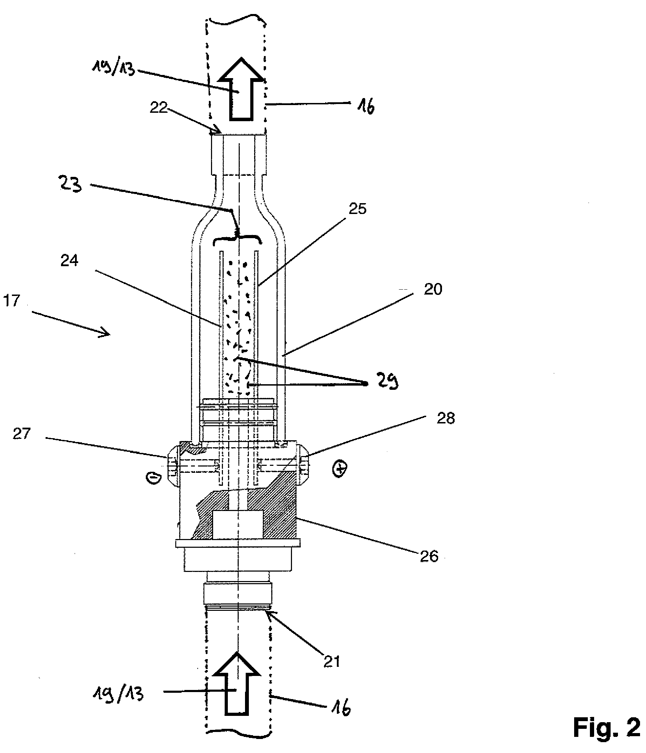

Nachfolgend wird die genaue Funktion der erfindungsgemäßen Reinigungseinrichtung 17 mit Bezug auf das Blockschaltbild in Figur 2 näher erläutert. Dabei sei zunächst auf die Konstruktion dieser Reinigungseinrichtung 17 näher eingegangen und anschließend auf deren Funktion:

Figur 2 zeigt eine Schnittansicht einer möglichen Ausführungsform einer Reinigungseinrichtung 17. Die Reinigungseinrichtung 17 weist ein Rohrleitungsstück 20 auf, welches einen als Wassereinlass ausgebildeten Anschluss 21 sowie einen als Wasserauslass ausgebildeten Anschluss 22 aufweist. Über die beiden Anschlüsse 21, 22 lässt sich das Rohrleitungsstück 20 in ein entsprechendes Leitungsstück des Wasserleitungsnetzes 15, beispielsweise in die Rückkopplungsrohrleitung 16, einfügen, beispielsweise indem die Anschlüsse 21, 22 in entsprechende Anschlüsse der Rückkopplungsrohrleitung 16 eingeschraubt werden. Trinkwasser 13, 19 kann so durch das Rohrleitungsstück 20 und damit die Reinigungseinrichtung 17 strömen.

Die Reinigungseinrichtung 17 weist ferner eine im Inneren des Rohrleitungsstückes 20 vorgesehene galvanische Zelle 23 auf. Die galvanische Zelle 23 umfasst im vorliegenden Beispiel zwei Elektroden 24, 25, die im Wesentlichen parallel zueinander innerhalb des Rohrleitungsstückes 20 angeordnet sind. Die beiden Elektroden 24, 25 sind jeweils so angeordnet und angeschlossen, dass sie mit jeweils einem unterschiedlichen elektrischen Potenzial beaufschlagt werden können.

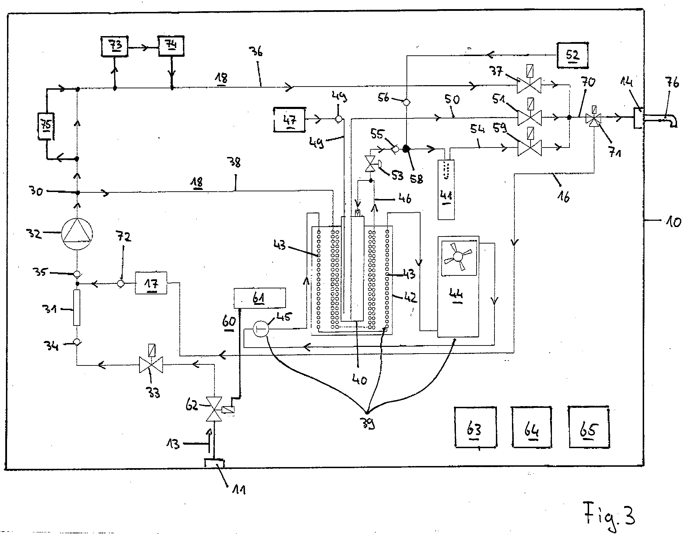

Die Reinigungseinrichtung 17 weist ferner ein Kontaktgehäuse 26 auf. Das Kontaktgehäuse 26 dient dem Zweck, die Reinigungseinrichtung 17 mit einer elektrischen Energieversorgung zu koppeln. Zu diesem Zwecke sind in dem Kontaktgehäuse 26 Kontaktanschlüsse 27, 28 eingebettet. Die Kontaktanschlüsse 27, 28 sind hier als Kontaktschrauben ausgebildet, wobei ein jeweiliger Kontaktanschluss 27, 28 im Inneren des Kontaktgehäuses 26 jeweils mit einer der Elektroden 24, 25 elektrisch verbunden ist. Im bestimmungsgemäßen Gebrauch kann beispielsweise der Kontaktanschluss 27 mit einem negativen Versorgungspotenzial beaufschlagt werden, so dass die erste Elektrode 24 ein negatives Potenzial enthält. Der zweite Kontaktanschluss 28 lässt sich dann mit einem positiven Versorgungspotenzial beaufschlagen, so dass die zweite Elektrode 25 mit einem positiven Potenzial beaufschlagt ist. Würde in diesem Falle Trinkwasser 13, 19 durch das Rohrleitungsstück 20 der Reinigungseinrichtung 17 strömen, dann wird zwischen den Elektroden 24, 25 aufgrund der so entstehenden galvanischen Reaktion Hypochlorit erzeugt und dem durchströmenden Trinkwasser zugesetzt, was in Fig. 2 durch das Bezugszeichen 29 angedeutet ist. Das so erzeugte Hypochlorit 29 wird über die Rückkopplungsrohrleitung 16 gepumpt und kann - wie nachfolgende noch mit Bezug auf Figur 3 erläutert wird - über das Wasserleitungsnetz 15 zirkulieren.

Figur 3 zeigt anhand eines Blockschaltbildes ein zweites, bevorzugtes Ausführungsbeispiel eines erfindungsgemäßen Wasserspenders.

Der in Figur 3 dargestellte Wasserspender 10 ist dazu ausgelegt, sowohl stilles Wasser als auch mit Sauerstoff und Kohlendioxid versetztes Trinkwasser auszugeben. Zu diesem Zwecke spaltet sich der zwischen dem Wassereinlass 11 und dem Wasserauslass 14 vorgesehene Hauptversorgungspfad 18 des Wasserleitungsnetzes 15 in drei Leitungspfade auf, wie nachfolgend noch detailliert erläutert wird.

Zunächst wird das vom öffentlichen Trinkwasserversorgungsnetz 12 gelieferte Trinkwasser 13 über den Wassereinlass 11 dem Hauptversorgungspfad 18 zugeführt. Zwischen dem Wassereinlass 11 und einem Abzweig 30 sind ein Wasserfilter 31 sowie eine Wasserpumpe 32 vorgesehen. Der Wasserfilter 31 dient dem Zweck, das in den Wasserspender 10 eingekoppelte Trinkwasser 13 zu filtern, dabei insbesondere Partikel und Schwebstoffe aus dem Trinkwasser 13 herauszufiltern. Die stromabwärts angeordnete Wasserpumpe 32 ist dazu vorgesehen, einen gewissen Wasserdruck im Wasserleitungsnetz 15 zu erzeugen, damit das Trinkwasser am Wasserauslass auch entnommen werden kann. Die Wasserpumpe 32 kann bedarfsgemäß auch steuerbar sein, das heißt sie kann entsprechend einer Programmierung einen gewissen Leitungsdruck erzeugen.

Zwischen dem Wassereinlass 11 und dem Wasserfilter 31 ist ein steuerbares Eingangsmagnetventil 33 vorgesehen. Zwischen diesem Magnetventil 33 und dem Wasserfilter 31 sowie zwischen dem Wasserfilter 31 und der Wasserpumpe 32 sind ferner jeweils Rückflusssperrventile 34, 35 vorgesehen. Über diese Rückflusssperrventile wird sichergestellt, dass kein Wasser stromabwärts zurückfließen kann. Rückflusssperrventile 34, 35 dienen im Allgemeinen dem Zweck, Wasser (oder andere flüssige oder gasförmigen Medien) lediglich in eine Richtung durchzulassen. Auf diese Weise wird auch eine Strömungsrichtung vorgegeben.

Die Wasserpumpe 32 ist ausgangsseitig über den Abzweig 30 und die Rohrleitung 36 direkt mit dem Wasserauslass 14 verbunden, wobei unmittelbar vor dem Wasserauslass 14 ein steuerbares Magnetsperrventil 37 in der Rohrleitung 36 angeordnet ist. Über die Rohrleitung 36 lässt sich somit stilles Trinkwasser, welches im Wesentlichen der Wasserqualität des Trinkwassers im öffentlichen Trinkwasserversorgungsnetz entspricht, am Auslass 14 bereitstellen.

Die Wasserpumpe 32 ist auslassseitig zudem über den Abzweig 30 und einer weiteren Rohrleitung 38 mit dem Wasserauslass 14 verbunden. Über den Abzweig 30 und die Rohrleitung 38 lässt sich das Trinkwasser durch Versetzen mit Sauerstoff und/oder Kohlendioxid entsprechend aufbereiten und in Form von sauerstoffversetztem Wasser und kohlendioxidversetztem Wasser am Wasserauslass 14 bereitstellen. Zu diesem Zwecke sind zwischen dem Abzweig 30 und dem Wasserauslass 14 eine Kühleinrichtung 39, ein Karbonator 40 sowie eine Sauerstoffbegasungseinrichtung 41 vorgesehen.

Der Karbonator 40 ist in an sich bekannter Weise in einem Gehäuse 42 eingebettet. In dem Gehäuse 42 befindet sich auch ein Verdampfer 43, der Bestandteil der Kühleinrichtung 39 ist. Die Kühleinrichtung 39 bildet einen geschlossenen Kühlkreis bestehend aus einem Verflüssiger 43, der ausgangsseitig mit einem als Kältemittelverdichter ausgebildeten Kompressor 45 verbunden ist. Der Kompressor 45 ist dazu ausgelegt, das Kühlmittel zu verdichten und ausgangsseitig in den innerhalb des Gehäuses 42 vorgesehenen Verdampfer 43 einzukoppeln. Dieser Verdampfer 43 ist ausgangsseitig wieder mit dem Verflüssiger 44 verbunden. Im Inneren des Gehäuses 42 erzeugt das in entsprechenden Kühlschlangen im Inneren des Gehäuses 42 zirkulierende, verdichtete Kühlmittel Abkälte.

Über den Abzweig 30 und die Rohrleitung 38 wird das von der Wasserpumpe 32 gepumpte Trinkwasser in entsprechende Trinkwasserspiralen, die in unmittelbarer Nähe zu entsprechenden Spiralen des Verdampfers 43 angeordnet sind, geleitet. Über die von dem Verdampfer 43 erzeugte Abkälte wird so das innerhalb des Gehäuses 42 zirkulierende Trinkwasser abgekühlt. Über eine Rohrleitung 46 wird das abgekühlte Trinkwasser in den Karbonator 40 eingekoppelt.

Ferner ist eine Einrichtung 47 zur Bereitstellung von lebensmittelechtem CO₂ vorgesehen. Diese Einrichtung 47 kann beispielsweise eine CO₂-Flasche oder auch ein Anschluss zur Ankopplung an eine externe CO₂-Quelle sein. Über die Einrichtung 47 lässt sich über eine Rohrleitung 48, in der zum Beispiel auch eine Rückflusssperre 49 vorgesehen ist, Kohlendioxid in den Karbonator 40 einkoppeln. Das im Karbonator 40 durchgeleitete, gekühlte Trinkwasser wird auf diese Weise mit CO₂ versetzt. Das so CO₂-versetzte, gekühlte Trinkwasser wird ausgangsseitig über eine Rohrleitung 50 dem Wasserauslass 14 zugeführt. Unmittelbar vor dem Wasserauslass 14 ist ein steuerbares Magnetsperrventil 51 in der Rohrleitung 50 angeordnet. Auf diese Weise lässt sich CO₂-versetztes, gekühltes Trinkwasser am Auslass 14 bereitstellen.

Die aus dem Gehäuse 42 herausführende Rohrleitung 46, die gekühltes Trinkwasser führt, ist über ein Druckregelventil 53 ebenfalls mit dem Wasserauslass 14 gekoppelt. Somit lässt sich auch über diesen Wasserpfad Trinkwasser dem Wasserauslass 14 zuführen, wobei dieses Trinkwasser zusätzlich mit Sauerstoff versetzt wird.

Zu diesem Zwecke sind in einer Rohrleitung 54 zwischen Druckregelventil 53 und Wasserauslass 14 ein Rückflusssperrventil 55 sowie die Sauerstoffbegasungseinrichtung 41 vorgesehen. Ferner ist eine Einrichtung 52 zur Bereitstellung von Sauerstoff vorgesehen. Diese Einrichtung 52 kann in Form einer O₂-Flasche ausgebildet sein oder auch ein Anschluss zur Ankopplung an eine externe O₂-Quelle sein. Die Einrichtung 52 ist ferner über ein weiteres Rückflusssperrventil 56 mit einem Abzweig 57 verbunden, der zwischen dem Rückflusssperrventil 55 und der Sauerstoffbegasungseinrichtung 41 angeordnet ist. Somit lässt sich von der Einrichtung 52 bereitgestellter Sauerstoff über die Rohrleitung 57 in die Rohrleitung 54 blasen. In der Sauerstoffbegasungseinrichtung 41 wird der dem Trinkwasser beigemischte Sauerstoff vermischt und über die Rohrleitung 54 dem Wasserauslass 14 zugeführt. Unmittelbar vor dem Wasserauslass 14 ist wiederum ein steuerbares Magnetsperrventil 59 in der Rohrleitung 54 angeordnet. Auf diese Weise lässt sich sauerstoffversetztes, gekühltes Trinkwasser am Wasserauslass 14 bereitstellen.

Der erfindungsgemäße Wasserspender 10 weist ferner eine Leckageabschalteinrichtung 60 auf. Die Leckageabschalteinrichtung 60 umfasst zumindest einen Leckagesensor 61, der an einer solchen Stelle des Wasserspenders 10 angeordnet ist, um eine Leckage erkennen zu können. Ferner weist die Leckageabschalteinrichtung 60 auch ein steuerbares Magnetsperrventil 62 auf, welches unmittelbar am eingangsseitigen Wasseranschluss 11 angeordnet ist, das heißt auch noch vor dem Magnetventil 33. Im Falle einer erkannten Leckage wird dieses Magnetventil 62 gesperrt, so dass damit ein weiterer Wasserzufluss über den Wasseranschluss 11 unterbunden werden kann. Der erfindungsgemäße Wasserspender 10 weist ferner eine Steuereinrichtung 63 auf, über die vorzugsweise sämtliche Funktionen des Wasserspenders 10 gesteuert werden können. Diese Steuereinrichtung 63 ist vorzugsweise auch programmierbar, was z.B. über eine eigens dafür vorgesehene Eingabeeinrichtung 64 möglich ist. Über diese Eingabeeinrichtung 64, die beispielsweise als Touchpad, Tastatur, elektronische Schnittstelle, Speicher oder dergleichen ausgebildet sein kann, lassen sich von einem Benutzer entsprechende Steuerbefehle oder Programmierungen eingeben. Über die Eingabeeinrichtung 64 lässt sich einerseits die Steuereinrichtung 63 steuern. Andererseits lassen sich von einem Benutzer darüber auch entsprechende Produktanforderungen an den Wasserspender 10 eingeben.

Der erfindungsgemäße Wasserspender 10 weist ferner eine Energieversorgung 65 auf, die im vorliegenden Ausführungsbeispiel als lokale Energiequelle ausgebildet ist, so dass der Wasserspender 10 auch im lokalen Betrieb ohne externe Energieversorgung betreibbar ist.

Erfindungsgemäß weist der Wasserspender 10 ferner eine Reinigungseinrichtung 17 auf, deren Aufbau und Funktion beispielsweise bereits anhand der Figur 2 erläutert wurde. Diese Reinigungseinrichtung 17 ist in einer eigens dafür vorgesehenen Rückkopplungsrohrleitung 16 angeordnet. Diese Rückkopplungsrohrleitung 16 zweigt von einer Rohrleitung 70 unmittelbar am Wasserauslass 14 ab. In dieser Rohrleitung 70, die einlassseitig mit sämtlichen Magnetsperrventilen 37, 51, 59 verbunden ist, ist ein steuerbares Dreiwegeventil 71 vorgesehen. Dieses steuerbare Dreiwegeventil 71 ist stromlos gesteuert, das heißt im stromlosen Betrieb leitet dieses Ventil das Trinkwasser stets zum Wasserauslass 14 durch. Wird dieses Dreiwegeventil 71 eingeschaltet, dann kann das von den Rohrleitungen 36, 50, 54 über die entsprechenden Magnetventile 37, 51, 54 gepumpte Trinkwasser nicht mehr dem Wasserauslass 14 zugeführt werden, sondern wird über die Rückkopplungsleitung 16 der Reinigungseinrichtung 17 zugeführt. Auslassseitig der Reinigungseinrichtung 17 ist ferner ein Rückflusssperrventil 72 vorgesehen, um zu verhindern, dass im normalen Betriebsmodus Trinkwasser in die Reinigungseinrichtung 17 gelangen kann.

Ferner ist ein Sensor 73 vorgesehen, der am Hauptversorgungspfad 18 angeschlossen ist. Dieser Sensor 73 ist dazu ausgelegt, die Konzentration des im Trinkwasser des Wasserleitungsnetzes 15 gelösten Natriumchlorids zu messen. Ferner ist ein Natriumchlorid-Depot 74 vorgesehen. Sofern die von dem Sensor 73 gemessene Natriumchlorid-Konzentration im Trinkwasser unter einen vorgegebenen Schwellwert fällt, kann dieser Sensor 73 (ggf. auch gesteuert über die Steuereinrichtung 63) das Natriumchlorid-Depot 74 ansteuern, welches dann die gewünschte Menge an Natriumchlorid dem Trinkwasser zugibt, um eine gewünschte Natriumchlorid- Konzentration im Trinkwasser zu erzeugen.

Ferner kann eine Desinfektionseinrichtung 75 vorgesehen sein, die dazu ausgebildet ist, bei Bedarf Desinfektionslösung dem Trinkwasser des Wasserleitungsnetzes 15 zuzugeben, um in einem Reinigungsbetrieb den Wasserspender 10 zu reinigen.

Der Wasserauslass 14 ist des Weiteren mit zumindest einer Zapfstelle 76 gekoppelt, über die das angeforderte Trinkwasser von einem Benutzer abgezapft werden kann.

Nachfolgend wird die Funktionsweise des erfindungsgemäßen Wasserspenders 10 kurz erläutert.

Der Wasserspender 10 lässt sich in mehreren, vorzugsweise insbesondere in drei verschiedenen Betriebsmodi betreiben, wobei die jeweiligen Betriebsmodi z.B. über die Steuereinrichtung 63 gesteuert werden:

### Betriebsmodus: Zapfbetrieb

Über einen entsprechenden Befehlsgeber, beispielsweise über eine Taste der Eingabeeinrichtung 64 oder etwa direkt über den Wasserauslass 14, kann eine entsprechende Wassersorte angefordert werden. Diese Anforderung wird von der Steuereinrichtung 63 verarbeitet, die wiederum die entsprechenden Komponenten des Wasserspenders 10 entsprechend steuert. Insbesondere werden dabei die ausgangsseitig angeordneten, steuerbaren Magnetsperrventile 37, 51, 59 angesteuert, je nachdem ob stilles Wasser, CO₂-versetztes Wasser bzw. O₂versetztes Wasser angefordert wurde. Über die Wasserpumpe 32 wird sodann Trinkwasser über das jeweils eingeschaltete Magnetsperrventil 37, 51, 59 vom Wassereinlass 11 zum Wasserauslass 14 gepumpt.

### Betriebsmodus: Wartungsbetrieb

Über eine weitere Eingabe an der Eingabeeinrichtung 64 kann der Wasserspender 10 in einen so genannten Wartungsmodus gesteuert werden. Im Wartungsmodus können verschiedene Spülsequenzen ausgelöst werden. Im Wartungsmodus kann zum Beispiel nach einem Anschließen des Wasserspenders 10 an einen Reinigungsbehälter, beispielsweise an den Desinfektionsbehälter 75, eine bestimmte Reinigungsflüssigkeit durch die Rohrleitungen 36, 38, 54, 50 geleitet werden sowie der Karbonator entleert und danach mit Reinigungsflüssigkeit gefüllt werden. Damit ist das gesamte System des Wasserspenders 10 für die Standdesinfektion vorbereitet. Nach Ablauf dieser Standdesinfektionszeit wird der Wasserspender 10 wieder an den Hauptleitungspfad angeschlossen. Der vorbeschriebene Prozess wird ohne Desinfektionslösung eine bestimmte Anzahl, typischerweise drei Mal, wiederholt, um so die Desinfektioinslösung aus dem Wasserleitungsnetz auszuspülen.

### Betriebsmodus: Reinigungsbetrieb

Der Reinigungsbetrieb kann ebenfalls über eine entsprechende Anforderung, welche über die Eingabeeinrichtung 64 eingegeben wird, gestartet werden. Typischerweise und vorzugsweise wird der Reinigungsbetrieb allerdings vollautomatisch über die Steuereinrichtung 63 initiiert.

Im Reinigungsbetrieb wird zunächst das Dreiwegeventil 71 am Ausgang des Wasserspenders 10 eingeschaltet, wodurch das Wasserleitungsnetz 15 vom Wasserauslass 14 entkoppelt wird. Zugleich wird auf diese Weise die Rückkopplungsrohrleitung 16 zugeschaltet. Das Wasser kann nun über die Rückkopplungsrohrleitung 16, in welcher auch die Reinigungseinrichtung 17 angeordnet ist, im geräteinternen Wasserleitungsnetz 17 zirkulieren. Ferner werden die entsprechenden Elektroden 24, 25 innerhalb der Reinigungseinrichtung 17 über die Energieversorgungseinrichtung 65 mit einer Spannung beaufschlagt. Die innerhalb der Reinigungseinrichtung 17 angeordnete galvanische Zelle 23 beginnt damit Hypochlorit 29 zu erzeugen. Dieses Hypochlorit 29 wird dem Trinkwasser zugesetzt und von der Wasserpumpe 32 gepumpt und kann so im geräteinternen Wasserleitungsnetz zirkulieren. Nacheinander öffnen und schließen dabei die Magnetsperrventile 37, 51, 59 nach vorbestimmten Schaltzeiten, zum Beispiel nach 40, 80, 120, etc. Sekunden, je nachdem, wie diese von der Steuereinrichtung 63 angesteuert werden. Das Öffnen und Schließen dieser Magnetsperrventile 37, 51, 59 kann eine vorgegebene Anzahl, beispielsweise zwei bis vier Mal, wiederholt werden, so dass eine vorgegebene Gesamtspüldauer erreicht wird. Nach Abschalten des letzten Magnetventils läuft die Wasserpumpe noch für eine vorgegebene Zeit, beispielsweise einige wenige Sekunden, nach. Anschließend steuert die Steuereinrichtung 63 das Dreiwegeventil 71 wieder aus, so dass dieses wieder den Wasserauslass 14 freigibt. Der aufgrund des Nachlaufens der Wasserpumpe im geräteinternen Wasserleitungsnetz 15 noch vorhandene Restdruck bewirkt ein geringes Ausströmen des Trinkwassers an der mit dem Wasserauslass 14 verbundenen Zapfstelle 76. Dadurch wird der nicht durchströmte Teil der Zapfstelle 76 ebenfalls mit Hypochlorit beladenem Wasser benetzt und kann damit ebenso desinfiziert werden.

### Bezugszeichenliste

- 10: (leitungsgebundener) Wasserspender
- 11: (eingangsseitiger) Wasseranschluss
- 12: öffentliches Trinkwasserversorgungsnetz, geräteexterne Trinkwasserversorgung
- 13: Trinkwasser
- 14: Wasserauslass
- 15: (geräteinternes) Wasserleitungsnetz
- 16: Rückkopplungsrohrleitung
- 17: Reinigungseinrichtung
- 18: Hauptversorgungspfad
- 19: zirkulierendes Trinkwasser
- 20: Rohrleitungsstück
- 21: Anschluss, Wassereinlass
- 22: Anschluss, Wasserauslass
- 23: galvanische Zelle, elektrochemisch betriebene Zelle
- 24: erste Elektrode
- 25: zweite Elektrode
- 26: Kontaktgehäuse
- 27, 28: elektrische Anschlüsse, Kontaktschrauben
- 29: erzeugtes Hypochlorit
- 30: Abzweig
- 31: Wasserfilter
- 32: Wasserpumpe
- 33: Magnetsperrventil
- 34, 35: Rückflusssperrventile
- 36: Rohrleitung
- 37: Magnetsperrventil
- 38: Rohrleitung
- 39: Kühleinrichtung
- 40: Karbonator
- 41: Sauerstoffbegasungseinrichtung
- 42: Gehäuse
- 43: Verdampfer
- 44: Verflüssiger
- 45: Kompressor
- 46: Rohrleitung
- 47: Einrichtung
- 48: Rohrleitung
- 49: Rückflusssperrventil
- 50: Rohrleitung
- 51: Magnetsperrventil
- 52: Einrichtung
- 53: Druckregelventil
- 54: Rohrleitung
- 55, 56: Rückflusssperrventile
- 57: Rohrleitung
- 58: Abzweig
- 59: Magnetsperrventil
- 60: Leckageabschalteinrichtung
- 61: Leckagesensor
- 62: Magnetsperrventil
- 63: Steuereinrichtung
- 64: Eingabeeinrichtung
- 65: Energieversorgung
- 70: ausgangsseitige Rohrleitung
- 71: steuerbares Dreiwegeventil
- 72: Rückflusssperrventil
- 73: Sensor für Natriumchlorid-Konzentration
- 74: Natriumchlorid-Depot
- 75: Desinfektionseinrichtung
- 76: Zapfstelle

## Patentansprüche

1. Leitungsgebundener Wasserspender (10) zur Abgabe von Trinkwasser,
mit zumindest einem Wasseranschluss, über den der Wasserspender (10) an eine geräteexterne Trinkwasserversorgung (12) anschließbar ist,
mit zumindest einem Wasserauslass (14), der über ein geräteinternes Wasserleitungsnetz (15) mit dem Wasseranschluss (11) verbunden ist,
mit zumindest einer Reinigungseinrichtung (17), welche in eine Wasserleitung (16) des geräteinternen Wasserleitungsnetzes (15) eingebaut ist und welche dazu ausgebildet ist, Hypochlorit (29) zu erzeugen, das zum Reinigen und zur Desinfektion dem im geräteinternen Wasserleitungsnetz (15) vorhandenen Trinkwasser (13) zuführbar ist,
wobei zumindest ein Sensor (73) vorgesehen ist, welcher in dem Wasserleitungsnetz (15) angeordnet ist und welcher dazu ausgebildet ist, die Konzentration des im Trinkwasser des Wasserleitungsnetzes (15) gelösten Natriumchlorids zu messen,
wobei ein Natriumchlorid-Depot (74) vorgesehen ist, welches dazu ausgebildet ist, dem im Wasserleitungsnetz (15) enthaltenen Trinkwasser (13) bei Bedarf Natriumchlorid zuzusetzen,
wobei, wenn die von dem Sensor (73) gemessene Natriumchlorid-Konzentration im Trinkwasser unter einen vorgegebenen Schwellwert fällt, das Natriumchlorid-Depot (74) eine gewünschte Menge an Natriumchlorid dem Trinkwasser zugibt, um eine gewünschte Natriumchlorid- Konzentration im Trinkwasser zu erzeugen.

2. Wasserspender nach Anspruch 1,
**dadurch gekennzeichnet,**
**dass** die Reinigungseinrichtung (17) aufweist:
- ein Rohrleitungsstück (20), welches über entsprechende Anschlüsse (21, 22) an die Wasserleitung (16) angeschlossen ist;
- eine elektrochemisch betriebene Zelle (23), die wenigstens zwei voneinander beabstandete, innerhalb des Rohrleitungsstückes (20) angeordnete Elektroden (24, 25) umfasst, die derart angeordnet sind und über deren Materialauswahl, Größe und Form derart ausgebildet sind, dass sie bei Beaufschlagung der Elektroden mit einer Spannung Hypochlorit (29) in dem in dem Rohrleitungsstück (20) vorhandenen Trinkwasser (13) erzeugen.

3. Wasserspender nach Anspruch 2,
**dadurch gekennzeichnet,**
**dass** die beiden Elektroden (24, 25) jeweils aus einem elektrisch leitfähigen Mischoxid bestehen oder als Graphitelektroden ausgebildet sind.

4. Wasserspender nach einem der vorherigen Ansprüche,
**dadurch gekennzeichnet,**
**dass** die Reinigungseinrichtung (17) Teil des Wasserleitungsnetzes (15) ist und in diese eingebaut ist oder als ein separates Teil an das Wasserleitungsnetz (15) anschließbar ausgebildet ist.

5. Wasserspender nach einem der vorherigen Ansprüche,
**dadurch gekennzeichnet,**
**dass** das Wasserleitungsnetz (15) aufweist:
- eine erste Wasserleitung (36), über welche dem Wasserauslass (14) stilles Trinkwasser zuführbar ist, und/oder
- eine zweite Wasserleitung (38, 50), in welcher ein Karbonator (40) angeordnet ist oder die mit einem Karbonator (40) koppelbar ist und über welche dem Wasserauslass (14) Kohlendioxid versetztes Trinkwasser zuführbar ist, und/oder
- eine dritte Wasserleitung (38, 54) aufweist, in welcher eine Sauerstoff-Injektoreinrichtung (41) angeordnet ist oder die mit einer Sauerstoff-Injektoreinrichtung (41) koppelbar ist und über welche dem Wasserauslass (14) Sauerstoff versetztes Trinkwasser zuführbar ist; und/oder
- eine vierte Wasserleitung (16) aufweist, die als Rückkoppelleitung (16) ausgebildet ist, über welche Trinkwasser (13) aus dem Wasserleitungsnetz (15) im Bereich des ausgangsseitigen Wasserauslasses (14) in einen Bereich des eingangsseitigen Wassereinlasses (11) derart rückführbar ist, dass das Trinkwasser (13) in dem Wasserleitungsnetz (15) zirkulieren kann.

6. Wasserspender nach Anspruch 5,
**dadurch gekennzeichnet,**
**dass** die Reinigungseinrichtung (17) in der vierten Wasserleitung (16) eingebaut ist.

7. Wasserspender nach einem der vorherigen Ansprüche,
**dadurch gekennzeichnet,**
**dass** eine elektrische Steuerungseinrichtung (63) vorgesehen ist, welche der Steuerung zumindest einer Funktion des Wasserspenders (10), insbesondere der Reinigungseinrichtung (17), von Absperrventilen (33, 37, 51, 59, 62, 71), der Wasserpumpe (32), der Kühleinrichtung (39), des Karbonators (40), der Leckage-Abschalteinrichtung (60), des Natriumchlorid-Depots und dergleichen, dient.

8. Wasserspender nach einem der vorherigen Ansprüche,
**dadurch gekennzeichnet,**
**dass** eine Wasserpumpe (32) vorgesehen ist, die dazu ausgebildet ist, Trinkwasser (13) über eine in dem Wasserleitungsnetz (15) vorgesehen Rückkoppelleitung (16) zirkulieren zu lassen und/oder dass eine Leckage-Abschalteinrichtung (60) vorgesehen ist, welche einen Leckage-Sensor (61) aufweist, der das Vorhandensein eines Wasserlecks detektiert, und die dazu ausgebildet ist, im Falle eines erkannten Lecks die Wasserzufuhr über den eingangsseitigen Wasseranschluss (11) automatisch zu sperren.

9. Wasserspender nach einem der vorherigen Ansprüche,
**dadurch gekennzeichnet,**
**dass** zumindest ein Wasserfilter (31) vorgesehen, der unmittelbar nach dem eingangsseitigen Wasseranschluss (11) in einer Wasserleitung des Wasserleitungsnetzes (15) angeordnet ist und der dazu ausgebildet ist, durch Herausfiltern von Partikeln, unerwünschte Substanzen, Trübstoffen und dergleichen aus dem über das Wasserversorgungsnetz (15) zugeführten Wasser die Wasserqualität zu verbessern und/oder dass eine Desinfektionseinrichtung (75) vorgesehen ist, die einen Behälter für Desinfektionslösung aufweist und die dazu ausgebildet ist, bei Bedarf Desinfektionslösung dem Trinkwasser (13) des Wasserleitungsnetzes (15) zuzugeben.

10. Wasserspender nach einem der vorherigen Ansprüche,
**dadurch gekennzeichnet,**
**dass** der Wasserspender (10) zumindest eines der folgenden Elemente aufweist:
- steuerbare Absperrventile, über die der Wasserauslass (14) wahlweise mit der ersten, der zweiten und/oder der dritten Wasserleitung (36; 38, 50; 38, 50) koppelbar ist;
- eine Kühleinrichtung (39), welche dazu vorgesehen ist, das in dem Wasserleitungsnetz (15) vorgesehen Trinkwasser (13) zu kühlen;
- eine geräteinterne lokale Energieversorgung (65), über welche der Wasserspender (10) elektrisch mit Energie versorgbar ist;
- elektrische Versorgungsanschlüsse, über welche der Wasserspender (10) mit einer externen Energiequelle verbindbar ist;
- eine Eingabeeinrichtung (64).

11. Verfahren zum Betreiben eines an einer geräteexternen Trinkwasserversorgung (12) angeschlossenen leitungsgebundenen Wasserspenders (10) nach einem der Ansprüche 1 bis 10,
- mit einem ersten Betriebsmodus, bei dem Trinkwasser (13) über einen Wasserauslass (14) des Wasserspenders (10) abgebbar ist, und
- mit einem zweiten Betriebsmodus, bei dem Trinkwasser (13) in einem geräteinternen Wasserversorgungsnetz (15) unter Verwendung einer eigens zur Trinkwasserreinigung in dem Wasserspender (10) vorgesehenen Reinigungseinrichtung (17) gereinigt wird, indem Hypochlorit (29) erzeugt und dem Trinkwasser (13) zugegeben wird.

12. Verfahren nach Anspruch 11,
**dadurch gekennzeichnet,**
**dass** der zweite Betriebsmodus
- lediglich in regelmäßigen zeitlichen Abständen und/oder
- nach einer vorgegebenen Zeit nach dem letzten Aktivieren des ersten Betriebsmodus und/oder
- lediglich während des Wochenendes und/oder in der Nacht aktiviert wird und/oder,
**dass** ein dritter Betriebsmodus vorgesehen ist, bei dem der Wasserspender (10) gewartet wird.

13. Verfahren nach einem der vorherigen verfahrensbezogenen Ansprüche,
**dadurch gekennzeichnet,**
**dass** nach einer gewissen Anzahl an durchlaufenen zweiten Betriebsmodi die Polarität der Elektroden (24, 25) umgepolt wird und/oder dass im zweiten Betriebsmodus Natriumchlorid dem Trinkwasser (13) zugesetzt wird, und/oder dass das Trinkwasser (13) im zweiten Betriebsmodus in dem Wasserversorgungsnetz (15) zirkuliert.

14. Verfahren nach einem der vorherigen verfahrensbezogenen Ansprüche,
**dadurch gekennzeichnet,**
**dass** die Konzentration von im Trinkwasser (13) des Wasserleitungsnetzes (15) gelöstem Natriumchlorid gemessen wird und bei Unterschreiten einer vorgegebenen Natriumchlorid-Konzentration dem Trinkwasser (13) innerhalb des Wasserleitungsnetzes (15) zusätzlich Natriumchlorid zugesetzt wird.

## Claims

1. Mains-connected water dispenser (10) for releasing drinking water,
comprising at least one water terminal, via which the water dispenser (10) can be connected to a drinking water supply (12) external to the appliance,
comprising at least one water outlet (14), which is connected to the water terminal (11) via a water distribution network (15) internal to the appliance, comprising at least one purification device (17), which is installed in a water pipe (16) of the water distribution network (15) internal to the appliance and which is configured to produce hypochlorite (29), which can be supplied to the drinking water (13) present in the water network (15) internal to the appliance for purification and disinfection,
at least one sensor (73) being provided, which is arranged in the water distribution network (15) and which is configured to measure the concentration of the sodium chloride dissolved in the drinking water in the water distribution network (15),
a sodium chloride reservoir (74) being provided, which is configured to add sodium chloride to the drinking water (13) contained in the water distribution network (15) as required,
the sodium chloride reservoir (74), when the sodium chloride concentration measured by the sensor (73) in the drinking water falls below a predetermined threshold, adding a desired amount of sodium chloride to the drinking water so as to produce a desired sodium chloride concentration in the drinking water.

2. Water dispenser according to claim 1,
**characterised in that**
the purification device (17) comprises:
- a pipeline portion (20) which is connected to the water pipe (16) via corresponding terminals (21, 22);
- an electrochemically powered cell (23), which comprises at least two electrodes (24, 25), which are spaced apart, are arranged within the pipeline portion (20), and are arranged in such a way and formed in such a way, in terms of material selection, size and shape, that they produce hypochlorite (29) in the drinking water (13) present in the pipeline portion (20) when a voltage is applied to the electrodes.

3. Water dispenser according to claim 2,
**characterised in that**
the two electrodes (24, 25) each consist of an electrically conductive mixed oxide or are formed as graphite electrodes.

4. Water dispenser according to any of the preceding claims,
**characterised in that**
the purification device (17) is part of the water distribution network (15) and is installed therein or formed connectable to the water distribution network (15) as a separate part.

5. Water dispenser according to any of the preceding claims,
**characterised in that**
the water distribution network (15) comprises:
- a first water pipe (36), via which still drinking water can be supplied to the water outlet (14), and/or
- a second water pipe (38, 50), in which a carbonator (40) is arranged or which can be coupled to a carbonator (40) and via which carbonated drinking water can be supplied to the water outlet (14), and/or
- a third water pipe (38, 54), in which an oxygen injector device (41) is arranged or which can be coupled to an oxygen injection device (41) and via which oxygenated drinking water can be supplied to the water outlet (14), and/or
- a fourth water pipe (16), which is configured as a feedback pipe (16), via which drinking water (13) from the water distribution network (15) in the region of the outlet-side water outlet (14) can be fed back into a region of the inlet-side water inlet (11) in such a way that the drinking water (13) can circulate in the water distribution network (15).

6. Water dispenser according to claim 5,
**characterised in that**
the purification device (17) is installed in the fourth water pipe (16).

7. Water dispenser according to any of the preceding claims,
**characterised in that**
an electrical control device (63) is provided, which is used to control at least one function of the water dispenser (10), in particular of the purification device (17), of check valves (33, 37, 51, 59, 62, 71), of the water pump (32), of the cooling device (39), of the carbonator (40), of the leak stop device (60), of the sodium chloride reservoir and the like.

8. Water dispenser according to any of the preceding claims,
**characterised in that**
a water pump (32) is provided, which is configured to make it possible for drinking water (13) to circulate via a feedback pipe (16) provided in the water distribution network (15), and/or **in that** a leak stop device (60) is provided, which comprises a leak sensor (61), which detects the presence of a water leak and which is configured to block the water supply via the inlet-side water terminal (11) automatically if a leak is detected.

9. Water dispenser according to any of the preceding claims,
**characterised in that**
at least one water filter (31) is provided, which is arranged immediately downstream from the inlet-side water terminal (11) in a water pipe of the water distribution network (15), and which is configured to improve the water quality by filtering particles, undesirable substances, cloudy substances and the like out of the water supplied via the water supply network (15), and/or in that a disinfection device (75) is provided, which comprises a container for disinfectant solution and which is configured to add disinfectant solution to the drinking water (13) of the water distribution network (15) as required.

10. Water dispenser according to any of the preceding claims,
**characterised in that**
the water dispenser (10) comprises at least one of the following elements:
- controllable check valves, via which the water outlet (14) can be coupled selectively to the first, the second and/or the third water pipe (36; 38, 50; 38, 50) ;
- a cooling device (39), which is provided to cool the drinking water (13) provided in the water distribution network (15);
- a local energy supply (65) internal to the appliance, via which the water dispenser (10) can be supplied with electric power;
- electric power terminals, via which the water dispenser (10) can be connected to an external power source;
- an input device (64).

11. Method for operating a mains-connected water dispenser (10), connected to a drinking water supply (12) external to the appliance, according to any of claims 1 to 10, comprising:
- a first mode of operation, in which drinking water (13) can be released via a water outlet (14) of the water dispenser (10), and
- a second mode of operation, in which drinking water (13) is purified in a water supply network (15) internal to the device, using a purification device (17) provided in the water dispenser (10) specifically for purifying drinking water, by producing hypochlorite (29) and adding it to the drinking water (13).

12. Method according to claim 11,
**characterised in that**
the second mode of operation is activated
- only at regular time intervals and/or
- after a predetermined time after the last activation of the first mode of operation and/or
- only at the weekend and/or at night, and/or
**in that** a third mode of operation is provided, in which the water dispenser (10) is serviced.

13. Method according to any of the preceding method claims,
**characterised in that**
after a particular number of completed second modes of operation the polarity of the electrodes (24, 25) is reversed and/or **in that** in the second mode of operation sodium chloride is added to the drinking water (13) and/or **in that** the drinking water (13) circulates in the water supply network (15) in the second mode of operation.

14. Method according to any of the preceding method claims,
**characterised in that**
the concentration of sodium chloride dissolved in the drinking water (13) of the water distribution network (15) is measured and, if it falls below a predetermined sodium chloride concentration, additional sodium chloride is added to the drinking water (13) within the water distribution network (15).

## Revendications

1. Distributeur d'eau (10) relié au réseau et destiné à délivrer de l'eau potable, comprenant :
au moins un raccordement en eau qui permet de raccorder le distributeur d'eau (10) à une alimentation en eau potable (12) externe à l'appareil,
au moins une sortie d'eau (14) qui est reliée au raccordement en eau (11) par l'intermédiaire d'un réseau de canalisation d'eau (15) interne à l'appareil,
au moins un moyen de purification (17) qui est intégré dans une canalisation d'eau (16) du réseau de canalisation d'eau (15) interne à l'appareil et qui est réalisé pour générer de l'hypochlorite (29) qui peut être acheminé pour purifier et pour désinfecter l'eau potable (13) présente dans le réseau de canalisation d'eau (15) interne à l'appareil,
dans lequel au moins un capteur (73) est prévu, qui est disposé dans le réseau de canalisation d'eau (15) et qui est conçu pour mesurer la concentration en chlorure de sodium dissout dans l'eau potable du réseau de canalisation d'eau (15),
dans lequel un dépôt de chlorure de sodium (74) est prévu, qui est réalisé de manière à ajouter si besoin du chlorure de sodium à l'eau potable (13) contenue dans le réseau de canalisation d'eau (15),
dans lequel, lorsque la concentration en chlorure de sodium dans l'eau potable mesurée par le capteur (73) tombe en dessous d'une valeur seuil prédéfinie, le dépôt de chlorure de sodium (74) ajoute une quantité souhaitée de chlorure de sodium à l'eau potable pour générer une concentration en chlorure de sodium souhaitée dans l'eau potable.

2. Distributeur d'eau selon la revendication 1,
**caractérisé en ce que**
le moyen de purification (17) présente :
- un tronçon de conduite (20) qui est raccordé à la canalisation d'eau (16) par des raccordements correspondants (21, 22) ;
- une cellule (23) entraînée électrochimiquement, qui comporte au moins deux électrodes (24, 25) qui sont distantes l'une de l'autre et disposées à l'intérieur du tronçon de conduite (20), sont disposées et réalisées en termes de sélection de matériau, de taille et de forme de telle sorte qu'elles génèrent de l'hypochlorite (29) dans l'eau potable (13) présente dans le tronçon de conduite (20) lorsque les électrodes sont sollicitées par une tension.

3. Distributeur d'eau selon la revendication 2,
**caractérisé en ce que**
les deux électrodes (24, 25) sont chacune composées d'un oxyde mixte électriquement conducteur ou sont conçues sous la forme d'électrodes graphites.

4. Distributeur d'eau selon une des revendications précédentes,
**caractérisé en ce que**
le moyen de purification (17) fait partie du réseau de réseau de canalisation d'eau (15) et est intégré dans celui-ci ou réalisé de manière à pouvoir être raccordé au réseau de canalisation d'eau (15) sous la forme d'un élément séparé.

5. Distributeur d'eau selon une des revendications précédentes,
**caractérisé en ce que**
le réseau de canalisation d'eau(15) présente :
- une première canalisation d'eau (36), qui permet d'acheminer de l'eau potable plate à la sortie d'eau (14), et/ou
- une deuxième canalisation d'eau (38, 50), dans laquelle est disposé un carbonateur (40), ou laquelle peut être couplée à un carbonateur (40) et permet d'acheminer à la sortie d'eau (14) de l'eau potable chargée de gaz carbonique, et/ou
- une troisième canalisation d'eau (38, 54), dans laquelle est disposé un moyen d'injection d'oxygène (41), ou laquelle peut être couplée à un moyen d'injection d'oxygène (41) et permet d'acheminer à la sortie d'eau (14) de l'eau potable chargée d'oxygène ; et/ou
- une quatrième canalisation d'eau (16), qui est réalisée sous la forme d'une conduite de retour (16) et permet de retourner l'eau potable (13) provenant du réseau de canalisation d'eau (15) au niveau de la sortie d'eau (14) située côté sortie dans une zone d'entrée de l'eau (11) située côté entrée de telle sorte que l'eau potable (13) peut circuler dans le réseau de canalisation d'eau (15).

6. Distributeur d'eau selon la revendication 5,
**caractérisé en ce que**
le moyen de purification (17) est intégré dans la quatrième canalisation d'eau (16).

7. Distributeur d'eau selon une des revendications précédentes,
**caractérisé en ce que**
un moyen de commande électrique (63) est prévu, qui sert à commander au moins une fonction du distributeur d'eau (10), en particulier du moyen de purification (17), des soupapes d'arrêt (33, 37, 51, 59, 62, 71), de la pompe à eau (32), du moyen de refroidissement (39), du carbonateur (40), du moyen de coupure anti-fuite (60), du dépôt de chlorure de sodium et similaire.

8. Distributeur d'eau selon une des revendications précédentes,
**caractérisé en ce que**
une pompe à eau (32) est prévue, qui est réalisée pour faire circuler l'eau potable (13) par l'intermédiaire d'une conduite de retour (16) prévue dans le réseau de canalisation d'eau (15) et/ou **en ce qu'**un moyen de coupure anti-fuite (60) est prévu, qui présente un capteur de fuite (61) qui détecte la présence d'une fuite d'eau et qui est réalisé de manière à bloquer automatiquement l'alimentation en eau sur le raccordement en eau (11) côté entrée dans le cas où une fuite a été détectée.

9. Distributeur d'eau selon une des revendications précédentes,
**caractérisé en ce que**
au moins un filtre à eau (31) est prévu, qui est disposé directement après le raccordement en eau (11) situé côté entrée dans une canalisation d'eau du réseau de canalisation d'eau (15), et est réalisé de manière à améliorer la qualité de l'eau en filtrant des particules, des substances non souhaitées, des matières troubles et similaires dans l'eau acheminée par l'intermédiaire du réseau d'alimentation en eau (15) et/ou **en ce qu'**un moyen de désinfection (75) est prévu, qui présente un réservoir pour la solution désinfectante et est réalisé de manière à ajouter si besoin une solution désinfectante à l'eau potable (13) du réseau de canalisation d'eau (15).

10. Distributeur d'eau selon une des revendications précédentes,
**caractérisé en ce que**
le distributeur d'eau (10) présente au moins un des éléments suivants :
- des soupapes d'arrêt commandables, qui permettent de coupler la sortie d'eau (14) au choix avec la première, la deuxième, et/ou la troisième canalisation d'eau (36; 38, 50; 38, 50) ;
- un moyen de refroidissement (39) qui est prévu pour refroidir l'eau potable (13) prévue dans le réseau de canalisation d'eau (15) ;
- une alimentation en énergie locale (65) interne à l'appareil, qui permet d'alimenter en énergie électrique le distributeur d'eau (10) ;
- des raccordements d'alimentation électrique qui permettent de relier le distributeur d'eau (10) à une source d'énergie externe ;
- un moyen d'entrée (64).

11. Procédé destiné à faire fonctionner un distributeur d'eau (10) relié au réseau et raccordé à une alimentation en eau potable (12) externe à l'appareil selon une des revendications 1 à 10, comprenant :
- un premier mode de fonctionnement, qui permet de délivrer de l'eau potable (13) par l'intermédiaire d'une sortie d'eau (14) du distributeur d'eau (10) et
- un deuxième mode de fonctionnement, qui permet de purifier l'eau potable (13) dans un réseau d'alimentation en eau (15) interne à l'appareil en utilisant un moyen de purification (17) prévu pour la purification d'eau potable dans le distributeur d'eau (10), en générant de l'hypochlorite (29) et en l'ajoutant à l'eau potable (13).

12. Procédé selon la revendication 11,
**caractérisé en ce que**
le deuxième mode de fonctionnement est activé :
- uniquement à intervalles réguliers et/ou
- après une durée prédéfinie suivant la dernière activation du premier mode de fonctionnement et/ou
- uniquement pendant la fin de semaine et/ou la nuit et/ou
**en ce qu'**un troisième mode de fonctionnement est prévu et permet d'entretenir le distributeur d'eau (10).

13. Procédé selon une des revendications précédentes relatives au procédé,
**caractérisé en ce que**
après un certain nombre d'exécutions du deuxième mode de fonctionnement, la polarité des électrodes (24, 25) est inversée et/ou **en ce que**, dans le deuxième mode de fonctionnement, du chlorure de sodium est ajouté à l'eau potable (13), et/ou **en ce que** l'eau potable (13) circule dans le deuxième mode de fonctionnement dans le réseau d'alimentation en eau (15).

14. Procédé selon une des revendications précédentes relatives au procédé,
**caractérisé en ce que**
la concentration en chlorure de sodium dissout dans l'eau potable (13) du réseau de canalisation d'eau (15) est mesurée et, en cas de chute en dessous d'une limite inférieure prédéfinie de la concentration en chlorure de sodium, du chlorure de sodium est alors ajouté à l'eau potable (13) à l'intérieur du réseau de canalisation d'eau (15).
